# EUROPÄISCHE PATENTSCHRIFT

(11) **EP 0 598 876 B1**
(45) Veröffentlichungstag und Bekanntmachung des Hinweises auf die Patenterteilung: **25.02.1998**
(21) Anmeldenummer: 93912784.1
(22) Anmeldetag: 25.05.1993
(51) Int. Cl.: D04H 13/00, B32B 5/06, D06N 7/00

(54) **FLÄCHENGEBILDE, INSBESONDERE FUSSBODENBELAG UND VERFAHREN ZU SEINER HERSTELLUNG**
FLAT STRUCTURE, IN PARTICULAR FLOOR COVERING, AND PROCESS FOR MANUFACTURING THE SAME
STRUCTURE PLATE, NOTAMMENT REVETEMENT POUR PLANCHERS, ET SON PROCEDE DE FABRICATION

(30) Priorität: 26.05.1992 DE 4217441
(43) Veröffentlichungstag der Anmeldung: 01.06.1994
(73) Patentinhaber: TESCH, Günter, CH-1700 Fribourg (CH)
(72) Erfinder: TESCH, Günter, CH-1700 Fribourg (CH)
(74) Vertreter: Lesser, Karl-Bolko, Dipl.-Ing.
(86) Internationale Anmeldenummer: EP9301310
(87) Internationale Veröffentlichungsnummer: WO9324694

(56) Entgegenhaltungen:
- EP-A- 0 089 018
- GB-A- 1 033 923
- US-A- 3 952 126

## Beschreibung

Die Erfindung betrifft ein Flächengebilde, insbesondere einen Fußbodenbelag, gemäß dem Oberbegriff des Anspruches 1 und ein Verfahren zu seiner Herstellung.

Derartige Flächengebilde sind z.B. aus der US-A-3 952 126 und der EP-A-0 089 018 bekannt. Sie werden in einem Verfahren hergestellt, bei dem eine Kernschicht aus Partikeln, zwischen eine Trägerschicht und eine Deckschicht gebracht wird. Die Deckschicht weist bei dem Flächengebilde eine aktiv nadelbare, Fasern enthaltende Schicht auf und diese Fasern werden durch die Kernschicht zwischen den nicht durchstechbaren Partikeln hindurch in die Trägerschicht hineingenadelt. Der Zusammenhalt der Kernschicht mit der Deckschicht und der Trägerschicht wird zunächst durch das Vernadeln der drei Schichten erreicht. Durch das anschließende Abbinden oder Vulkanisieren der Kernschicht erhält ein solches Flächengebilde eine zusätzliche Bindewirkung von innen. Bei dem beschriebenen Flächengebilde besteht die Kernschicht aus elastischem, unausgeschäumtem Material wie z.B. Granulaten aus vulkanisiertem Gummi, aus unausgeschäumten Elastomeren mit oder ohne Bindemittel, aus Nadelfilzbodenbelägen gewonnenen Granulaten und dgl. Derartige Flächengebilde können auch als Fußbodenbeläge verwendet werden.

Die meistverbreiteten Bodenbeläge bestehen aus einem polymerisierten Kunststoff, meistens aus Polyvinylchlorid. Weil sie sehr verbreitet sind, ist die Problematik der Wiederverarbeitung bzw. Recyclierung dieser Kunststoffe sehr bedeutsam. Bisher wurden die abgenutzten, alten PVC-Fußbodenbeläge entweder weggeworfen, zermahlen oder pulverisiert und als Zusätze zur Herstellung von neuen Materialien eingesetzt. Der Einsatz solcher zermahlenen Materialien ist jedoch begrenzt, da Qualitätseinbußen eintreten. Somit fallen große Restmengen solcher PVC-Altbeläge an, welche entsorgt werden müssen.

Ein anderes Verfahren zur Wiedergewinnung von wiederverwendbarem PVC ist in der DE-B 2 434 925 beschrieben. Es handelt sich dabei um eine relativ aufwendige chemische Verarbeitung des angefallenen Alt-PVC-Materials.

In der DE-B 1 179 906 ist ein Verfahren beschrieben, bei dem die PVC-Abfallmaterialien zunächst pulverisiert und anschließend auf eine Faserunterlage aufgepreßt werden. Dabei muß eine bestimmte Zusammensetzung des Materials beachtet werden, damit ein brauchbarer Fußbodenbelag entsteht.

Aufgabe der vorliegenden Erfindung ist es, ein gattungsgemäßes Flächengebilde, insbesondere einen Fußbodenbelag so auszugestalten, daß insbesondere stückiges Polyvinylchlorid ökonomisch und ohne großen Aufwand wieder eingesetzt werden kann.

Diese Aufgabe wird durch das im Anspruch 1 angegebene Flächengebilde gelöst. Ein Verfahren zur Herstellung des erfindungsgemäßen Flächengebildes ist in den Ansprüchen 9 bis 14 angegeben.

Wird stückiges, eine feste Form aufweisendes Polyvinylchlorid-Material als Kernschicht zwischen einer Deckschicht und einer Trägerschicht in einem Flächengebilde eingesetzt, wobei die Schichten miteinander vernadelt werden, so ergibt sich eine Möglichkeit, PVC-Kunststoffabfälle ökonomisch einzusetzen. Es können auch zerkleinerte PVC-ummantelte Kabel (auch mit Cu- oder Al-Seele) eingesetzt werden. Das Abfall-PVC-Material braucht nur mechanisch für die Weiterverarbeitung vorbereitet zu werden, d.h. es müssen nur geeignete Stücke des Kunststoffmaterials hergestellt werden. Dieser Vorbereitungsvorgang ist einfach und in der Regel ohne weitere Schritte durchführbar. Das erfindungsgemäße Flächengebilde weist auch hohe Qualität und gute Gebrauchseigenschaften auf. Dadurch, daß eine Faserschicht in festen und weichen PVC-Kunststoff eingearbeitet ist, hat das Gebilde besonders gute Schalldämmeigenschaften und eine besonders hohe Haltbarkeit. Durch den Einsatz von zu Stücken verarbeiteten alten PVC-Belägen kann der Einsatz des Altmaterials bei der Herstellung von Neubelägen von etwa 10 - 20%igen Beimischung auf 80 - 100% gesteigert werden. Durch den Einsatz von stückigem Material ist es möglich, einen Fußbodenbelag herzustellen, welcher in seiner Oberschicht bis zu 70 - 90% altes PVC-Material aufweist und bis zu 10 - 15% aus Bindefasern und ggf. zum Ausfüllen von Zwischenräumen und zum zusätzlichen Binden aus einem Zusatz von insbesondere neuer PVC-Bindemasse besteht. Der Einsatz von größeren späneartigen Stücken mit einer Länge von z.B. 15 mm, einer Breite von etwa 5 mm und einer Dicke zwischen 0,5 und 2 mm ist besonders vorteilhaft. Die Nadeln durchdringen diese Stücke beim Vernadelungsprozeß, so daß die Stücke gleichzeitig in ihrer Position in der Kernschicht fixiert werden und sind damit unverrückbar. Dadurch ist auch erreicht, daß eine aufwendige Verarbeitung von Kunststoffabfällen zu kleinen, quasi Granulat-Stücken entfällt. Es können also größere Stücke eingesetzt werden und das erfindungsgemäße neue Flächengebilde weist trotzdem gute Gebrauchseigenschaften auf. Außerdem tritt bei dieser Stückegröße der Vorteil auf, daß das Wiedereinsetzen von beim Gebrauch z.B. der PVC-Beläge zersetzten Weichmachern durch die größere Oberfläche der Stücke einfacher ist als bei kleineren Stücken. Durch die feste Faserbindung in allen drei Schichten und insbesondere in der Kernschicht liegt eine auch für weitere Formgebungsverfahren ausreichende Festigkeit des erfindungsgemäßen Gebildes vor. Die die Kernschicht bildenden Stücke können aus unterschiedlichen Materialien, insbesondere aus verschiedenfarbigen Materialien bestehen. Dies ist besonders dann von Vorteil, wenn für die Gebrauchseigenschaften des fertigen Flächengebildes eine Farbmusterung vorgesehen ist. Dabei kann sogar das normalerweise stattfindende Einfärben des Produktes entfallen. Bestehen die Fasern der Deckschicht des vernadelten Flächengebildes aus dem gleichen Material wie die Kernschicht, wird eine Rohstoff-Einheitlichkeit gewährleistet, was beim Entsorgen von Bedeutung ist.

In besonderer Ausgestaltung sieht die Erfindung vor, daß die Trägerschicht aus einem Gewebe oder Vliesstoff besteht, insbesondere aus Polypropylen, Polyethylen oder Jute.

Grundsätzlich muß der Kernschicht eine PVC-Bindemasse oder Plastisol-Paste zugegeben werden. Die Plastisol-Paste kann durch eine direkte Zugabe in die Kernschicht vor dem Vernadelungsvorgang erfolgen. Es handelt sich dabei um ein sog. Naß-Vernadeln, da die Nadeln die Fasern aus der Deckschicht durch die noch sehr weiche, pastöse Plastisol-Paste führen. Diese Verfahrensart wird gewählt, wenn das Altmaterial besonders gut erweicht und aufgelöst werden soll und eine gute Bindung und Dichte des Produkts erreicht werden soll. Für eine faserartige, teppichähnliche Oberfläche ergibt dies auch eine sichere Einbindung.

Die Plastisol-Paste kann auch nur der Deckschicht zugegeben werden. Durch den Vernadelungsprozeß und Fließprozeß gelangt sie in die Kernschicht. Die Plastisol-Paste kann auch dem bereits vernadelten Flächengebilde zugegeben werden. Diese Verfahrensart wird dann gewählt, wenn trocken vernadelt werden soll. Durch die Bindemasse werden außer Erhöhung der Festigkeit des Gebildes die in der Kernschicht evtl. noch vorhandenen Lücken und Poren ausgefüllt. Wird die Bindemasse auf die Deckschicht nach dem Vernadeln aufgegeben, so werden z.B. Nadellöcher oder andere Fehlstellen an der Oberfläche ausgeglichen. Außerdem kann durch die Plastisol-Paste eine Vergleichmäßigung der Grundfarbe oder sogar das "Einfärben" des Flächengebildes erfolgen. Bei gröberen, lockeren Nadelstrukturen kann die Plastisol-Paste selbst mit PVC-Stücken gefüllt sein. Durch den Zusatz der Plastisol-Paste wird nicht nur die Festigkeit des Gebildes erhöht, bzw. ein solcher Zusammenhalt erreicht, daß das Flächengebilde besonders auf Knicken und Rollen unempfindlich, d.h. besonders elastisch ist, sondern es werden durch die Anwendung der Plastisol-Paste den gebrauchten Kunststoffen in der Kernschicht auch die notwendigen Weichmacher ergänzend zugeführt.

Die Wärmebehandlung des vernadelten und mit der Bindemasse versehenen Gebildes ist wesentlich, da die Plastisolmasse unter Wärmeeinfluß geliert und in diesem Zustand ihre Bindewirkung entfaltet. Durch eine zusätzliche Druckanwendung werden die Lunkerstellen beseitigt.

Das Verfahren zur Herstellung des erfindungsgemäßen vernadelten Flächengebildes wird so durchgeführt, daß zunächst PVC-Material, insbesondere PVC-Abfallmaterial zu Stücken zerkleinert wird und die Stücke auf einer Trägerschicht, vorzugsweise nebeneinander abgelegt werden, wobei sie die Kernschicht des herzustellenden Flächengebildes bilden. Die Kernschicht wird mit einer Fasern enthaltenden Deckschicht abgedeckt. Anschließend werden die drei Schichten mit den der Deckschicht entnommenen Fasern miteinander vernadelt. Durch das Vernadeln erfolgt bereits eine Vorverfestigung des herzustellenden Flächengebildes. Anschließend wird das vernadelte Flächengebilde unter Druck wärmebehandelt. In das Flächengebilde kann auch eine Noppen- / Nackenstruktur eingearbeitet werden. Bisher war es möglich, nur Gummi-Bodenbeläge mit derartigen Strukturen zu versehen; bei herkömmlichen PVC-Bodenbelägen ist das Einarbeiten von solchen Strukturen aufgrund des Fließens des Materials nicht möglich. Bei dem erfindungsgemäßen Fußbodenbelag liegt durch die Faserbindung ein so verfestigtes Material vor, daß das Einbringen einer Noppen- / Nockenstruktur sehr gut möglich ist. Sind die Noppen derart in einen Fußbodenbelag eingebracht, daß "von unten" Hohlräume entstehen, so können diese mit Kleber ausgefüllt und ein solcher Belag dadurch sofort mit dem Boden verbunden werden.

Vorteilhaft ist, wenn die Stücke vor und / oder während des Vernadelns erwärmt werden, z.B. mittels Wärmestrahler. Die Erwärmung der Kernschicht vor bzw. während des Vernadelungsprozesses verhindert zusätzlich einen Nadelbruch, da die zu vernadelnden Stücke erweichen. Außerdem bleiben die in das warme Material der Kernschicht eingeführten Fasern der Deckschicht darin besser haften.

Sollte eine erhöhte Elastizität und Beständigkeit des Endproduktes erforderlich sein, so werden die einzusetzenden PVC-Stücke erfindungsgemäß einige Stunden dem Einfluß von Weichmachern oder ggf. Lösungsmitteln ausgesetzt. Vorteilhafterweise wird die Wirkung dieser Mittel durch erhöhte Temperatur gesteigert. Durch den Einsatz von geeigneten Lösungsmitteln wird neben der Wirkung von Weichmachern das Aufquellen des Kunststoffes beschleunigt. Durch das Aufquellen wird die Struktur des Materials so verändert, daß das Eindringen und Aufnehmen von Weichmachern vereinfacht wird. Auch farbstoffhaltige Weichmacher können eingesetzt werden, damit wird dem Material eine ansprechende Wirkung verliehen.

Vorteilhaft ist es, wenn die Plastisol-Paste bzw. PVC-Bindemasse in einer solchen Menge und Viskosität zugegeben wird, daß mindestens die in der Kernschicht enthaltenen PVC-Stücke von der Masse eingeschlossen und umschlossen sind. Dadurch bindet die Masse beim Gelieren durch Wärme mit den PVC-Stücken der Kernschicht zu einem innigen Verbund ab. Es entsteht eine mit den Fasern, den Stücken und der Masse im wesentlichen homogene Schicht.

Ein vernadeltes Flächengebilde wird vorteilhafterweise durch mindestens ein Kalanderwalzenpaar geführt. Durch den Kalandriervorgang wird nicht nur eine Vergleichmäßigung der Dicke des Flächengebildes erreicht, sondern es werden auch die verbliebenen Poren und Lunkerstellen geschlossen und die Bindefasern im Falle des Heißkalandrierens durch die warme PVC-Masse eingehüllt und eingeschlossen. Das Heißkalandrieren durch ein Walzenpaar ergibt bereits ein festes Flächengebilde. Eine Oberflächenstruktur kann dem Flächengebilde beim Kalandrieren mittels einer Riffelwalze aufgeprägt werden. Dadurch, daß das dem Kalander zugeführte Flächengebilde bereits vernadelt und somit verfestigt ist, kann eine höhere Dickenverformung stattfinden als bei üblichen, nicht vernadelten Flächengebilden.

Die erfindungsgemäßen Flächengebilde können als Fußbodenbeläge einen glatten oder einen teppichähnlichen PVC-Belag-Charakter aufweisen. Die Oberfläche oder die Rückseite des Belages können ganz oder partiell durch Anwärmen wieder klebrig gemacht und leicht bearbeitet werden. Es können also auch nachträglich Muster eingebracht werden. Sie können auch sehr gut kaschiert werden, insbesondere mit chemisch passenden Folien, Flächen, Gewebe und Gewirkestrukturen. Damit kann die Reißfestigkeit insbesondere auch bei Dachbahnen nachträglich erhöht werden. Bei Bodenbelägen können Faserstrukturen eingebunden werden. Derartige Bodenbeläge weisen ausgezeichnete Schalldämmungseigenschaften und einen sehr günstigen Hart- / Weich-Effekt auf. Der erfindungsgemäße Bodenbelag ist trotz der Fasern praktisch wasserdicht und abriebfest. Er ist auch schneid- und stanzfähig.

Die Erfindung wird anhand der nachfolgenden Figuren näher erläutert. Es zeigen:
- Fig. 1: eine schematische Darstellung eines Schnittes durch ein vernadeltes Flächengebilde, und
- Fig. 2: eine schematische Darstellung eines Schnittes durch das vernadelte und kalandrierte Flächengebilde.

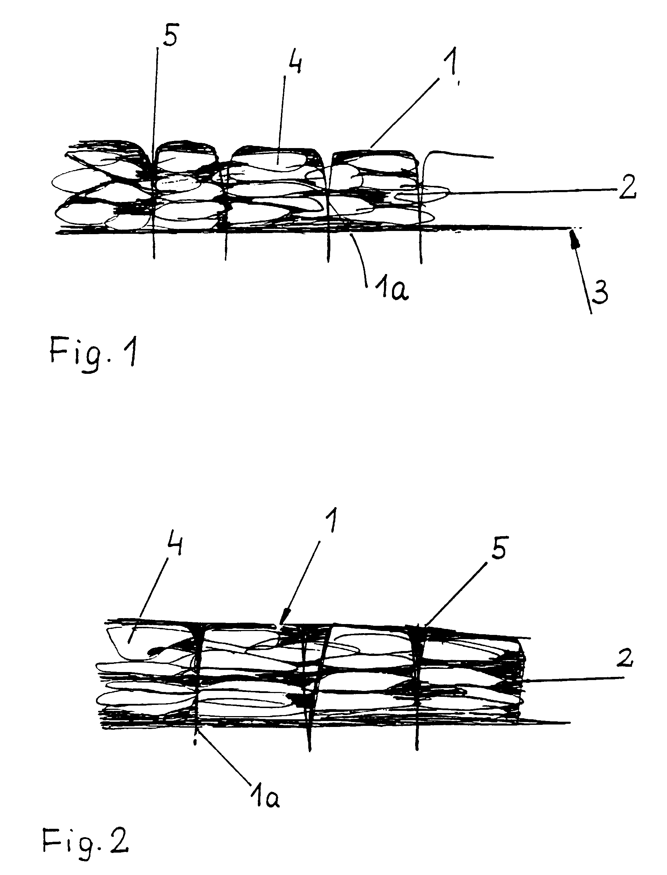

In Figur 1 ist schematisch ein Schnitt durch ein vernadeltes Flächengebilde dargestellt. Fasern la einer Deckschicht 1 verbinden die Deckschicht 1 mit einer Kernschicht 2 und einer Trägerschicht 3. Die Stücke 4 aus PVC-Material sind durch die Fasern la, sei es durch das Durchdringen, sei es durch eine dichte Nadel- und Faserführung, bereits so positioniert, daß sie sich nicht mehr frei bewegen bzw. in Querrichtung verschieben können. Eine Plastisol-Paste 5 befindet sich in der Kernschicht 2.

Figur 2 zeigt eine schematische Darstellung des Flächengebildes nach einem Kalandriervorgang. Die Dicke des kalandrierten Flächengebildes ist kleiner als die Dicke des nur vernadelten Flächengebildes. Die Oberfläche des kalandrierten Gebildes ist glatt, d.h. die Nadelöffnungen bzw. sonstige Lücken sind hier durch die Plastisol-Paste 5 bzw. PVC-Bindemasse ausgefüllt. Die Plastisol-Paste 5 bzw. auch die mit PVC-Stücken angereicherte PVC-Bindemasse 5 ist durch den Kalandriervorgang in die Kernschicht 2 eingedrückt, wodurch eine noch bessere Bindung zwischen den einzelnen PVC-Stücken 4 entsteht. Durch die Temperatureinwirkung des Kalandriervorganges geliert die Plastisol-Paste 5 aus. Darüber hinaus werden die Fasern la der Deckschicht 1, welche in die Kernschicht 2 eingezogen sind, durch die Druckeinwirkung beim Kalandriervorgang in der Kernschicht verkeilt, so daß eine zusätzliche Verbindung der drei Schichten 1, 2, 3 untereinander bewirkt wird. Der Einsatz von zusätzlichen Bindemitteln wie Latex ist nicht mehr notwendig.

## Patentansprüche

1. Flächengebilde, insbesondere Fußbodenbelag, mit einer nadelfähige Fasern (la) aufweisenden Deckschicht (1), einer Trägerschicht (3) und einer Kernschicht (2), wobei die drei Schichten (1, 2, 3) mittels der Deckschicht (1) entnommenen Fasern (la) vernadelt sind, dadurch gekennzeichnet, daß die Kernschicht (2) aus stückförmigem, eine feste Form aufweisendem Polyvinylchlorid (PVC)-Material (4) und einer PVC-Bindemasse oder Plastisol-Paste (5) besteht und die Fasern (la) in allen drei Schichten (1, 2, 3) fest eingebunden sind.

2. Flächengebilde nach Anspruch 1, dadurch gekennzeichnet, daß Kernschicht-Stücke (4) aus einem PVC-Bodenbelag, insbesondere gebrauchtem PVC-Bodenbelag, hergestellt sind.

3. Flächengebilde nach Anspruch 1 oder 2, dadurch gekennzeichnet, daß die PVC-Stücke (4) eine Größenordnung von maximal 5 mm in der Breite und 15 mm in der Länge und eine Dicke von etwa 0,5 mm bis 2 mm aufweisen.

4. Flächegebilde nach einem der Ansprüche 1 - 3, dadurch gekennzeichnet, daß die Trägerschicht (3) aus einem Gewebe oder Vliesstoff besteht.

5. Flächengebilde nach Anspruch 4, dadurch gekennzeichnet, daß das Trägermaterial (3) Polypropylen, Polyethylen oder Jute ist.

6. Flächengebilde nach einem der Ansprüche 1 - 5, dadurch gekennzeichnet, daß die PVC-Bindemasse oder die Plastisol-Paste (5) im wesentlichen nur in der Kernschicht (2) vorliegen.

7. Flächengebilde nach einem der Ansprüche 1 - 6, dadurch gekennzeichnet, daß mindestens die Fasern ( 1a ) der Deckschicht (1) von einer Plastisol-Paste (5) eingeschlossen sind.

8. Flächengebilde nach einem der Ansprüche 1 - 7, dadurch gekennzeichnet, daß die PVC-Bindemasse oder die Plastisol-Paste (5) PVC-Schrot enthält.

9. Verfahren zum Herstellen eines Flächengebildes nach einem der Ansprüche 1 - 8, dadurch gekennzeichnet, daß
- zur Herstellung einer Kernschicht (2) PVC-Material, insbesondere Abfall-PVC-Material, zu Stücken (4) aufgetrennt wird und diese PVC-Stücke (4) auf eine Trägerschicht (3) abgelegt werden,
- auf die Kernschicht (2) eine nadelfähige Fasern (la) enthaltende Deckschicht (1) abgelegt wird,
- der Kernschicht (2) oder der Deckschicht (1) PVC-Bindemasse oder Plastisol-Paste zugegeben wird,
- die drei Schichten (1, 2, 3) durch der Deckschicht (1) entnommene Fasern (la) vernadelt werden,
- und das entstandene Flächengebilde anschließend unter Druck wärmebehandelt wird.

10. Verfahren nach Anspruch 9, dadurch gekennzeichnet, daß die PVC-Stücke (4) vor dem Vernadeln und / oder während des Vernadelns erwärmt werden.

11. Verfahren nach Anspruch 9, dadurch gekennzeichnet, daß die PVC-Stücke (4) vor dem Ablegen auf die Trägerschicht (3) dem Einfluß von Weichmachern oder Lösungsmitteln ausgesetzt werden.

12. Verfahren nach einem der Ansprüche 9 bis 11, dadurch gekennzeichnet, daß spätestens nach dem Vernadeln auf die Deckschicht (1) Plastisol-Paste (5) oder PVC-Bindemasse aufgegeben wird.

13. Verfahren nach einem der Ansprüche 9 bis 12, dadurch gekennzeichnet, daß nach dem Aufgeben der Plastisol-Paste (5) bzw. PVC-Bindemasse das Flächengebilde durch mindestens ein Walzenpaar geführt wird und die aufgegebene Masse (5) mindestens in die Deckschicht (1) gedrückt wird.

14. Verfahren nach Anspruch 13, dadurch gekennzeichnet, daß die deckschichtseitige Oberfläche (1) beim Walzen geglättet oder geprägt wird.

## Claims

1. Flat structure, in particular floor covering, with a covering layer (1) containing fibres a capable of being needled, a carrier layer (3) and a core layer (2), the three layers (1, 2, 3) being needled by means of fibres la taken from the covering layer, characterised in that the core layer (2) comprises polyvinyl chloride (PVC) material (4) in the form of pieces having a rigid shape and a PVC bonding mass or plastisol paste (5) and the fibres (la) are firmly bound into all three layers (1, 2, 3).

2. Flat structure according to claim 1, characterised in that core-layer pieces (4) are produced from a PVC floor covering, in particular used PVC floor covering.

3. Flat structure according to claim 1 or 2, characterised in that the PVC pieces (4) have a size of the order of a maximum of 5mm in width and 15mm in length and a thickness of about 0.5 to 2mm.

4. Flat structure according to one of claims 1 to 3, characterised in that the carrier layer (3) comprises a fabric or fleece.

5. Flat structure according to claim 4, characterised in that the carrier material (3) is polypropylene, polyethylene or jute.

6. Flat structure according to one of claims 1 to 5, characterised in that the PVC bonding mass or the plastisol paste (5) is present substantially only in the core layer (2).

7. Flat structure according to one of claims 1 to 6, characterised in that at least the fibres (la) of the covering layer (1) are enclosed in a plastisol paste (5)

8. Flat structure according to one of claims 1 to 7, characterised in that the PVC bonding mass or the plastisol paste (5) contains PVC chips.

9. Process for manufacturing a flat structure according to one of claims 1 to 8 characterised in that
- for producing a core layer (2) PVC material, in particular scrap PVC material, is separated into pieces (4) and these PVC pieces (4) are deposited on a carrier layer (3),
- a covering layer (1) containing fibres (la) capable of being needled is deposited on the core layer (2),
- PVC bonding mass or plastisol paste is added to the core layer (2) or the covering layer (1),
- the three layers (1, 2, 3) are needled together by fibres (la) taken from the covering layer (1),
- and the flat structure which results is heat-treated under pressure.

10. Process according to claim 9, characterised in that the PVC pieces (4) are heated before the needling and/or during the needling.

11. Process according to claim 9, characterised in that the pieces (4) are exposed to the influence of plasticisers or solvents before being deposited on the carrier layer (3).

12. Process according to one of claims 9 to 11, characterised in that at the latest after the needling plastisol paste (5) or PVC bonding mass is applied to the covering layer (1).

13. Process according to one of claims 9 to 12, characterised in that after the application of the plastisol paste (5)or PVC bonding mass the flat structure is conducted through at least one pair of rolls and the applied mass (5) is pressed at least into the covering layer (1).

14. Process according to claim 13, characterised in that the surface (1) on the covering- layer side is smoothed or stamped on rolling.

## Revendications

1. Corps plan textile, plus particulièrement un revêtement de sol avec une couche de recouvrement (1), montrant des fibres aiguilleteurs (la), une couche porteuse (3) et une couche centrale (2), où les trois couches (1, 2, 3) sont aiguillées au moyen de fibres (la) retirés de la couche de recouvrement (1), caractérisé en ce que la couche centrale (2) consiste en une matière de chlorure de polyvinyle (CPV) (4) en morceaux ayant une forme solide et un liant CPV ou en pâte Plasticol (5) et en ce que les fibres (la) sont solidement liés dans toutes les couches (1, 2, 3).

2. Corps plan textile selon la revendication 1, caractérisé en ce que les morceaux de la couche centrale (4) sont fabriqués d'un revêtement de plancher en CPV, plus particulièrement d'un revêtement de plancher en CPV déjà utilisé.

3. Corps plan textile selon la revendication 1 ou 2, caractérisé en ce que les morceaux de CPV (4) sont de l'ordre de grandeur de 5 mm de largeur, de 15 mm de longueur au maximum et d'une épaisseur d'environ 0,5 mm à 2 mm.

4. Corps plan textile selon l'une des revendications 1 à 3, caractérisé en ce que la couche porteuse (3) consiste en un tissu ou d'un non-tissé.

5. Corps plan textile selon la revendication 4, caractérisé en ce que la matière porteuse (3) est du propylène, du polyéthylène ou de la jute.

6. Corps plan textile selon l'une des revendications 1 à 5, caractérisé en ce que le liant CPV ou la pâte Plastisol (5) ne se trouvent essentiellement que dans la couche centrale (2).

7. Corps plan textile selon l'une des revendications 1 à 6, caractérisé en ce qu'au moins les fibres (la) de la couche de recouvrement (1) sont enfermés d'une pâte Plastisol (5).

8. Corps plan textile selon l'une des revendications 1 à 7, caractérisé en ce que le liant CPV ou la pâte Plastisol (5) contient des déchets de CPV.

9. Méthode pour la fabrication d'un corps plan textile selon l'une des revendications 1 à 8, caractérisée en ce que
- pour la fabrication d'une couche centrale (2), de la matière CPV, plus particulièrement des déchets de CPV, est divisée en morceaux et en ce que ces morceaux de CPV (4) sont aménagés sur une couche porteuse (3).
- une couche de recouvrement (1) contenant des fibres aiguilleteurs (la) est aménagée sur la couche centrale,
- un liant CPV ou de la pâte Plastisol est ajouté à la couche centrale (2) ou à la couche de recouvrement (1),
- que les trois couches (1, 2, 3) sont aiguilletées par des fibres (la) retirés de la couche de recouvrement (1),
- et qu'ensuite le corps plan textile formé subira un traitement thermique sous pression.

10. Méthode selon la revendication 9, caractérisée en ce que les morceaux de CPV (4) sont chauffés avant l'aiguilletage et/ou durant l'aiguilletage.

11. Méthode selon la revendication 9, caractérisée en ce que les morceaux de CPV (4) sont exposés à l'influence des plastifiants ou des dissolvants avant la pose sur la couche porteuse (3).

12. Méthode selon l'une des revendications 9 à 11, caractérisée en ce qu'une pâte Plastisol (5) ou un liant CPV est appliqué sur la couche de recouvrement (1) après l'aiguilletage au plus tard.

13. Méthode selon l'une des revendications 9 à 12, caractérisée en ce qu'après l'application de la pâte Plasticol (5), respectivement du liant CPV le corps plan textile est guidé par une paire de rouleaux et la masse appliquée (5) est au moins enfoncée dans la couche de recouvrement (1).

14. Méthode selon la revendication 13, caractérisée en ce que la surface du côté de la couche de recouvrement (1) est lissée ou gaufrée durant le roulage.
